(19) **Europäisches Patentamt**
**European Patent Office**
**Office européen des brevets**

(11) Numéro de publication : **0 286 557 B1**

(12) **FASCICULE DE BREVET EUROPEEN**

(45) Date de publication du fascicule du brevet :
29.05.91 Bulletin 91/22

(51) Int. Cl.⁵ : **G01M 3/38**

(21) Numéro de dépôt : **88430006.2**

(22) Date de dépôt : **04.03.88**

(54) **Dispositif pour détecter des micro-fuites de gaz par rayonnement infrarouge.**

(30) Priorité : 06.03.87 FR 8703212

(43) Date de publication de la demande :
12.10.88 Bulletin 88/41

(45) Mention de la délivrance du brevet :
29.05.91 Bulletin 91/22

(84) Etats contractants désignés :
AT BE CH DE ES GB GR IT LI LU NL SE

(56) Documents cités :
FR-A- 2 453 406
FR-A- 2 522 147
FR-A- 2 586 808
PATENT ABSTRACTS OF JAPAN, vol. 10, no. 64 (P-436)[2121], 14 mars 1986; & JP-A-60 205 242 (TOSHIBA K.K.) 16-10-1985

(73) Titulaire : TECHNOLOGIES SPECIALES INGENIERIE - T.S.I. Société à Responsabilité Limitée dite:
247, Boulevard Cunéo
F-83000 Toulon (FR)

(72) Inventeur : Martin, André
247, Boulevard Cunéo
F-83000 Toulon (FR)
Inventeur : Luong, Minh Phong
4, rue Lamartine
F-91230 Montgeron (FR)

(74) Mandataire : Moretti, René et al
c/o Cabinet BEAU DE LOMENIE
"Prado-Mermoz" 232, Avenue du Prado
F-13008 Marseille (FR)

## Description

La présente invention a pour objet un dispositif pour détecter des micro-fuites de gaz par rayonnement infrarouge.

Le secteur technique de l'invention est celui des appareillages utilisant le rayonnement infrarouge pour détecter dans l'atmosphère ou en immersion des micro-fuites de gaz s'échappant par exemple à travers des cordons de soudure assurant la liaison des plaques formant une paroi.

Le procédé qui consiste à utiliser la détection de l'infrarouge proche entre 2 et 5 µm au moyen d'une caméra pour visualiser des écarts thermiques est de nos jours parfaitement connu.

L'application de cette procédure pour la détection d'une fuite consiste à visualiser des gradients thermiques provoqués par la détente d'un gaz suite à son passage au travers d'un orifice de très faible section. Cette application peut être réalisée dans l'atmosphère ou sous l'eau.

Dans le cas où la détection doit être opérée en immersion, il est impératif de résoudre deux problèmes fondamentaux :

a)– d'une part il ne doit pas y avoir d'écran aqueux entre l'écran et la plaque à ausculter pour que le rayonnement infrarouge ne soit pas absorbé ;

b)– d'autre part la diffusion calorifique dans le métal étant très importante, il est indispensable de pouvoir y remédier par un procédé technique. Une solution retenue est de capter l'écoulement du fluide au moyen d'un dispositif permettant une détente adiabatique.

Dans l'hypothèse de petites perturbations, la théorie des variables internes qui prend en compte les deux principes de la thermodynamique et la loi de FOURIER permet d'écrire :

C.T. = div (K grad T) – Tασ + D + φ

–C : est la chaleur spécifique volumique ;

–T : est la température ambiante absolue ;

–K : est la conductivité calorifique ;

–α : est la dilatation thermique ;

–σ : est la contrainte

–D : est la dissipation intrinsèque ;

–φ : est la densité des sources de chaleur.

Dans l'équation développée plus haut, le terme "div (K grad T) est, dans le cas du métal, très important en raison de la valeur du coefficient K.

Pour résoudre le problème posé, on a contourné la difficulté au moyen d'un dispositif permettant de mettre en valeur les termes des sources de variations de température.

La résolution des problèmes soulevés en a) et b) constitue un objectif de l'invention dans une application sous-marine, bien que l'invention puisse trouver son application dans l'atmosphère.

Ces objectifs sont atteints par le dispositif selon l'invention pour détecter des micro-fuites de gaz par rayonnement infrarouge sur une paroi, le dispositif comprenant une enceinte comportant une ouverture équipée de moyens d'étanchéités pour être mis au contact de la paroi ; d'un caisson étanche, séparé de ladite enceinte par une cloison, dans lequel caisson est disposée une caméra infrarouge dont l'objectif est situé devant une lentille perméable aux radiations infrarouges et enchâssée dans ladite cloison de séparation ; des moyens pour plaquer de façon étanche l'enceinte contre ladite paroi ; des moyens pour créer une dépression dans l'enceinte et un écran isolant, placé dans la partie centrale de l'ouverture de l'enceinte et appliquée contre ladite paroi pour filtrer les fuites de gaz aspirée sous l'effet de vide afin d'obtenir un gradient thermique détectable par thermovision.

Ledit écran est monté dans un cadre d'un contour parallèle à l'ouverture de l'enceinte, lequel cadre est soumis à l'action de moyens élastiques reliés à l'enceinte pour maintenir le cadre et l'écran à l'extérieur de ladite ouverture en vue d'obtenir, lors du rapprochement de l'enceinte et de la paroi le placage de l'écran contre ladite paroi.

Dans un mode de réalisation, ledit écran est réalisé à partir d'un matériau isolant de synthèse à cellules ou à porosités ouvertes.

Dans un autre mode de réalisation, ledit écran est réalisé à partir d'une grille isolante à mailles serrées/

Dans un mode d'exécution, ladite enceinte, qui est hémisphérique, et ledit caisson, qui est cylindrique, sont coaxiaux et l'objectif de la caméra est disposé de telle sorte que le champ de rayonnement infrarouge intéresse la totalité de la surface de l'écran.

Le bord qui entoure l'ouverture de l'enceinte comporte une gorge dans laquelle est fixé un joint d'étanchéité comportant un talon et une lèvre souple s'étendant sur un des côtés du talon et la partie inférieure du talon est, avant placage du joint sur la paroi, en retrait par rapport à l'extrémité de la lèvre du joint.

Ladite lèvre forme avec la partie inférieure du talon une dépression en forme de gouttière dont la profondeur maximale "p" est sensiblement égale à la distance "d" qui sépare l'extrémité de la lèvre et la partie inférieure du talon.

Le joint peut comporter en outre, dans le fond de ladite dépression et accolé au talon, un bourrelet de produit hydrofuge.

Ledit dispositif comporte en outre des ventouses réparties à la périphérie de l'enceinte et situées sensiblement dans le plan de l'ouverture de ladite enceinte, lesquelles ventouses ont pour fonction d'assurer l'accrochage du dispositif sur la paroi et le rapprochement de l'enceinte et de ladite paroi en vue de la mise en place correcte du joint à lèvre sur la paroi et son écrasement avant la mise en dépression de l'enceinte pour réaliser l'opération du détection thermographique des fuites de gaz.

Chacune des ventouses se compose de trois éléments coaxiaux :

     – un cylindre comportant un joint d'étanchéité à sa partie inférieure destiné à venir au contact de la paroi ;

     – un piston monté coulissant dans ledit cylindre et soumis à l'action de moyens élastiques pour repousser le piston du côté de la partie inférieure du cylindre ;

     – un corps annulaire qui entoure le cylindre et qui est relié à l'enceinte, lequel corps est soumis à l'action de moyens élastiques pour le repousser du côté de la partie supérieure du cylindre ;

     – des moyens pour repousser le piston vers le haut et créer une dépression dans la chambre ainsi créée à la partie inférieure du cylindre en vue de plaquer la ventouse sur la paroi ;

     – et des moyens pour simultanément abaisser ledit corps annulaire pour plaquer l'enceinte sur ladite paroi.

Les moyens pour simultanément déplacer le piston vers le haut de la ventouse et le corps annulaire vers le bas sont des billes, disposées dans des logements réservés au même niveau dans la paroi dudit cylindre et réparties à sa périphérie, lesquelles billes coopèrent avec des épaulements coniques dont l'un est réservé à la périphérie du piston et à ses génératrices qui convergent vers le bas sur l'axe de symétrie de la ventouse et dont l'autre est réservé à l'intérieur du corps annulaire et à ses génératrices qui convergent de haut en bas sur ledit axe de la ventouse, de telle sorte que les billes, qui sont poussées par l'épaulement du piston lors de son mouvement ascendant, prennent appui sur l'épaulement du corps annulaire et au fur et à mesure de la montée du piston sont expulsées par la périphérie du piston dans ledit corps annulaire pour venir en appui sur l'épaulement conique dudit corps et communiquer à celui-ci un mouvement descendant.

Les avantages et les caractéristiques de l'invention ressortiront encore à la lecture de la description suivante d'un mode de réalisation d'un dispositif adapté pour une application sous-marine en référence au dessin annexé sur lequel :

     – la figure 1 est une vue en perspective illustrant la mise en oeuvre du dispositif selon l'invention pour la détection de fuites de gaz provenant d'un caisson partiellement immergé dans une piscine;

     – la figure 2 est une vue de dessus du dispositif de détection selon l'invention ;

     – la figure 3 est une vue en coupe diamétrale schématique du dispositif selon l'invention ;

     – la figure 4 est une vue en coupe diamétrale d'une ventouse équipant le dispositif de la figure 3. Cette figure représente également en coupe transversale le joint à lèvre qui équipe le bord inférieur de l'enceinte.

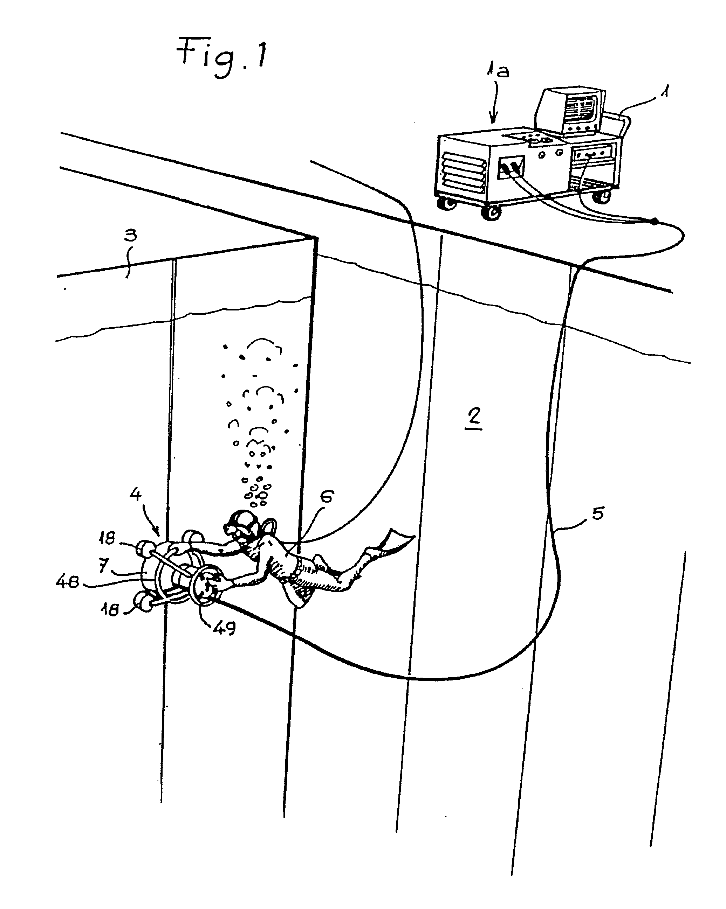

On se reporte d'abord à la figure 1 du dessin qui représente une installation mobile de détection comprenant un chariot 1 monté sur des roues pour se déplacer sur le sol environnant une piscine 2 et dans laquelle est placé un caisson 3 partiellement immergé.

Le chariot 1 supporte un groupe 1a comportant les sources d'énergies et l'ensemble de traitement des images infrarouges indispensable à la mise en oeuvre de l'appareillage.

Ce groupe se compose d'un ensemble vidéo infrarouge, d'un groupe compresseur d'air équipé de ses accessoires et d'une pompe à vide avec retour de l'eau résiduelle dans la piscine 2.

Le groupe 1a est relié au dispositif selon l'invention 4 par un ombilical 5 étanche et isolé du milieu ambiant et renfermant les liaisons électrique pneumatique et de vide. Par exemple la longueur de cet ombilical est de 50 mètres.

Comme on peut le voir sur la figure, le dispositif 4 est, par exemple manoeuvré par un opérateur 6 équipé d'un équipement de plongée.

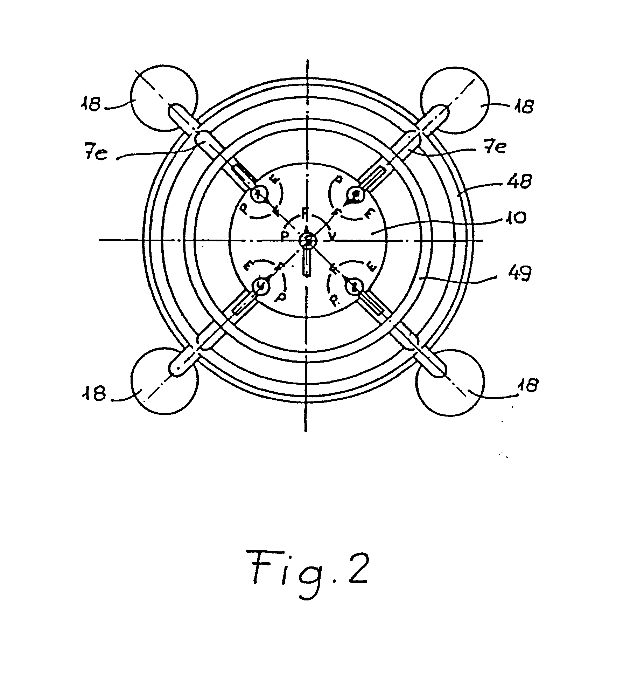

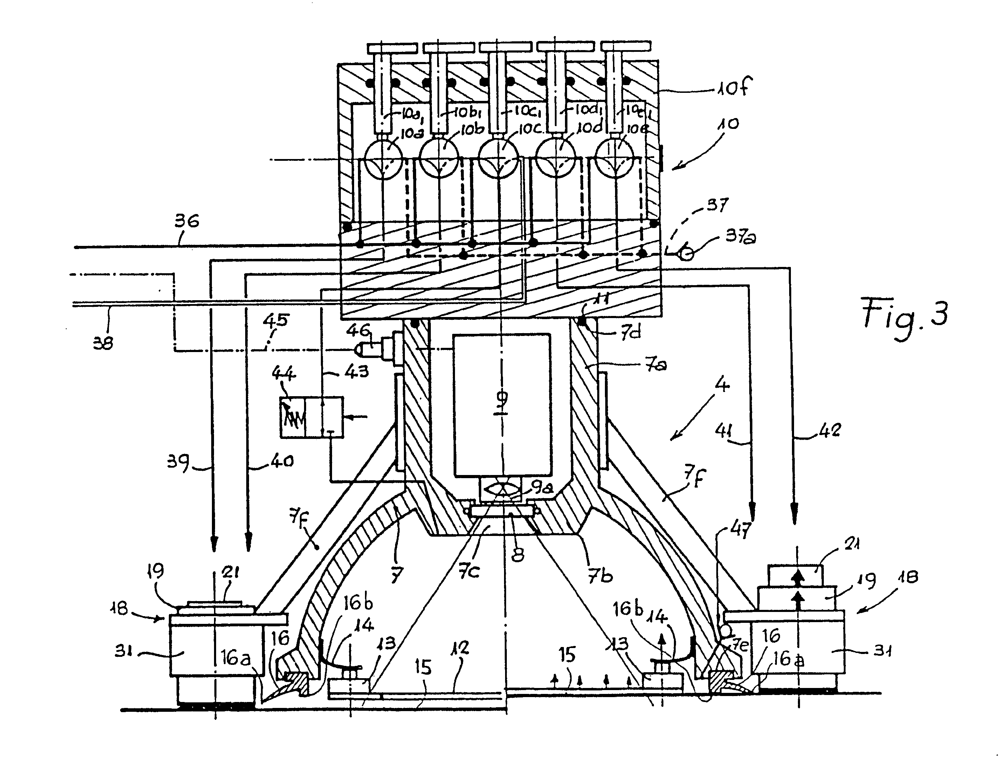

Ledit dispositif 4 se compose (figures 2 et 3) d'une enceinte en forme de cloche hémisphérique 7, laquelle comporte, à sa partie supérieure, un caisson étanche 7a, par exemple cylindrique. L'enceinte 7 et le caisson 7a sont coaxiaux et sont séparés par une paroi 7b parallèle au plan dans lequel se situe l'ouverture de l'enceinte 7.

La paroi 7b comporte une ouverture circulaire 7c dans laquelle est enchâssée une lentille 8 perméable aux radiations infrarouges entre 2 et 5 μm, par exemple en fluorine, silicium, germanium ou fluorure de Magnésium. Dans ledit caisson étanche 7a, est disposée une caméra à détection d'infrarouges 9 dont l'objectif 9a est au contact de la face de la lentille 8 située du côté du caisson 7a.

Un bloc de distribution 10, dont la description sera donnée plus loin, obture la caisson 7a à sa partie supérieure. L'étanchéité est obtenue au moyen d'un joint torique 11 disposé dans une gorge 7d réservée dans la paroi périphérique dudit caisson 7a.

Pour contourner la difficulté soulevée par la diffusion calorifique dans le métal, le dispositif comporte un écran 12 constitué par un matériau de synthèse à cellules ou à porosités ouvertes par exemple en mousse de polyuréthane, soie, buvard etc.... ou encore par une grille isolante à mailles serrées. Cet écran 12 est maintenu dans un cadre 13 relié à l'enceinte 7 par des ressorts 14 de telle sorte que l'écran 12 est au repos, tel que représenté à gauche de la figure 3, légèrement à l'extérieur de l'ouverture de l'enceinte 7. L'écran 12, entouré de son cadre 13, obture quasi totalement la section de l'ouverture de l'enceinte 7 et est appliqué, pendant que le dispositif est opérationnel, sur la paroi 15 à contrôler tel que cela est illustré à droite de la figure 3.

Le dispositif 4 est plaqué sur la paroi métallique à analyser 15, soit par l'intermédiaire d'un plongeur 6, soit par un robot par exemple un mini sous-marin piloté de la surface. La fixation de l'enceinte 7 sur la paroi 15 est réalisée en deux temps tel que cela sera exposé plus loin.

L'enceinte 7 comporte autour de son ouverture une gorge 7e dans laquelle est placé un joint à lèvre 16 adapté pour pouvoir absorber des dénivelés de 3 à 5 millimètres résultant de soudures effectuées bord à bord sur des plaques superposées.

Le joint 16 a pour fonction d'assurer l'étanchéité de l'enceinte 7 pendant l'opération de détection.

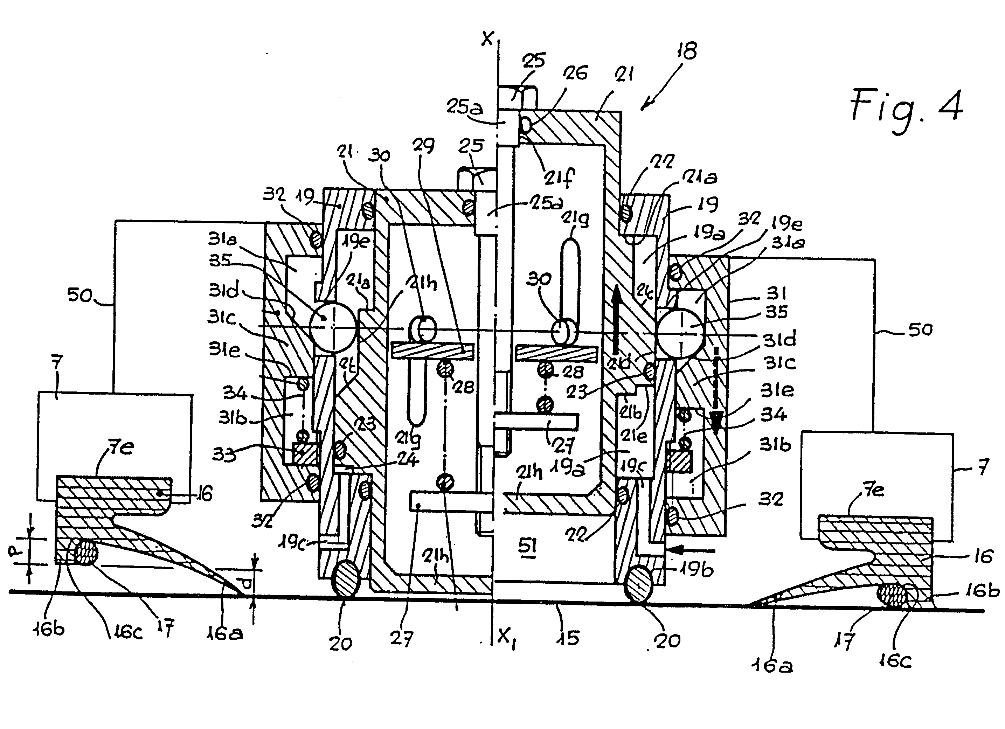

Le joint 16 (figures 3 et 4) est réalisé en élastomère et comporte une lèvre souple 16a et un talon 16b qui constituent une dépression 16c en forme de gouttière. Comme on peut le voir sur la figure 3, la lèvre 16a s'étend vers l'extérieur de l'enceinte 7. Cette lèvre est très effilée à son extrémité et son épaisseur progresse jusqu'à ladite dépression 16c dont la profondeur "p" est sensiblement égale au dénivelé à absorber. Lorsque le joint n'est pas sollicité, la distance "d" qui sépare l'extrémité de la lèvre et la partie inférieur du talon 16d est sensiblement égale à la profondeur "p" de ladite dépression (voir figure 4 à gauche du dessin).

Pour améliorer le collage du joint 16, on peut disposer dans ladite dépression 16c un bourrelet ou cordon 17 d'un produit hydrofuge par exemple du silicone pour améliorer le collage du joint sur les cordons de soudure s'étendant transversalement audit dispositif.

Le dispositif comporte également des ventouses 18 par exemple au nombre de quatre, lesquelles sont fixées par tous moyens connus au caisson étanche 7a par l'intermédiaire de bras obliques 7f.

Tel que cela est illustré à la figure 2, les ventouses 18 sont à 90° l'une de l'autre et sont toutes situées au même niveau par rapport au bord inférieur de l'enceinte 7.

On se reporte à la figure 4 du dessin qui représente à plus grande échelle une des ventouses 18 qui équipent le dispositif, laquelle ventouse se compose d'un cylindre 19 comprenant une chambre intérieure 19a, lequel cylindre est ouvert à sa partie inférieure et comporte à sa périphérie un joint torique 20, placé dans une gorge 19b, réservée dans l'épaisseur de la paroi.

Dans ledit cylindre est monté coulissant un piston 21 dont la périphérie externe coopère avec les extrémités du cylindre 19 situées de part et d'autre de la chambre annulaire 19a. Des joints toriques 22 placés dans des gorges réservées dans la paroi du cylindre assurent l'étanchéité.

Ledit piston 21 comporte à sa périphérie un pre- mier épaulement 21a destiné à venir en appui sur la partie supérieure de la chambre 19a du cylindre, un second épaulement 21b destiné à venir en appui sur la partie inférieure de ladite chambre 19a et un troisième épaulement conique 21 formant un angle de 45° avec l'horizontale dont les génératrices convergent de bas en haut sur l'axe de symétrie X X1 de la ventouse. La partie du piston 21d, qui comporte l'épaulement conique, coopère avec la face interne de la chambre annulaire 19a. Un joint torique 23, placé dans une gorge pratiquée dans le piston, assure l'étanchéité. La partie du piston 21d comporte, à sa partie inférieure et à côté de l'épaulement 21b, une feuillure 21e qui, lorsque le piston est en position basse, l'épaulement 21b étant au contact de la partie inférieure de la chambre 19a, forme une chambre annulaire de faible section 24. Le piston 21 comporte en son centre et le long de l'axe X X1 une vis 25 qui s'étend à l'intérieur du piston jusqu'à la partie inférieure de celui-ci. Cette vis 25 comporte un col 25a de plus grand diamètre que la tige, situé au-dessous de sa tête hexagonale, lequel col est passé dans un orifice 21f réservé au centre de la partie supérieure du piston. Un joint torique 26 assure l'étanchéité à cet endroit. la tige 25b de la vis est filetée à sa partie infé- rieure pour coopérer avec un taraudage pratiqué dans une rondelle d'appui 27 d'un ressort également en appui sur une autre rondelle 29, elle-même en appui sur des doigts cylindriques 30 fixés au cylindre 19 et s'étendant orthogonalement au cylindre 19 et au piston 21 et légèrement à l'intérieur de celui-ci. Les doigts 30 coopèrent avec des lumières 21g parallèles à l'axe X X1 et qui délimitent la course du piston. Le ressort 28, dont la tension est réglée par la vis 25, qui a pour effet de déplacer la rondelle d'appui 27, tend à mettre le piston 21 en appui par son épaulement 21b sur la partie inférieure de la chambre annulaire 19a. Dans cette position illustrée à gauche de la figure 4, la partie inférieure du piston 21h s'étend légèrement à l'extérieur du cylindre 19 sans pour autant atteindre la paroi 15 du fait de la présence du joint torique 20. Le cylindre 19 comporte, à sa partie inférieure, des conduits 19c qui débouchent dans la chambre annulaire 19 au droit de la feuillure 21e du piston.

Autour du cylindre 19 est monté coulissant un corps annulaire 31 comportant deux chambres inter- nes 31a/31b séparées par une paroi 31c formant, à sa partie supérieure, un épaulement conique 31d formant un angle de 45° avec l'horizontale et dont les génératrices convergent de haut en bas sur l'axe X X1.

La paroi 31c comporte également, à sa partie inférieure, un autre épaulement 31e.

L'étanchéité entre le corps annulaire et le cylindre 19 est assurée par des joints toriques 32, disposés dans des gorges réservées dans ledit corps et à ses parties extrêmes supérieure et inférieure.

Le cylindre 19 comporte, à sa périphérie et du côté de sa partie inférieure, un filetage 19d sur lequel est vissée une bague 33. Un ressort 34 mis en appui d'une part sur ladite bague 33 et d'autre part sur l'épaulement 31e à tendance à pousser le corps annulaire 31 vers la partie supérieure de la ventouse (voir figure 4 à gauche du dessin). Dans cette position du corps annulaire 31, l'épaulement conique 31d est mis au contact de plusieurs billes 35, lesquelles sont toutes au même niveau et sont logées dans des orifices circulaires 19e réservés dans la paroi du cylindre 19. Les billes 35, par exemple au nombre de quatre et disposées à 90° sont en appui sur la partie cylindrique 21h du piston s'étendant entre l'épaulement conique 21c et l'épaulement 21a.

Les billes 35 et les doigts 30 sont tous au même niveau, leurs axes étant situés dans un plan perpendiculaire à l'axe X X1.

Les quatre ventouses sont fixées au caisson étanche 7a qui prolonge vers le haut l'enceinte hémisphérique 7 et par l'intermédiaire des bras obliques 7f qui sont eux-mêmes fixés aux corps 31 des ventouses.

Le bloc de distribution 10 comporte cinq vannes à trois voies 10a... 10e, dont les commandes 10a₁... 10e₁ s'étendent à l'extérieur du boîtier 10f.

Lesdites vannes sont reliées à des circuits connectés aux différents organes du dispositif : un circuit d'air comprimé 36, un circuit d'échappement d'air 37, équipé d'un clapet 37a ; un circuit de vide 38 ; des circuits de liaison 39/40/41/42 aboutissant aux ventouses 18. La vanne 10c est reliée à l'enceinte par un circuit 43, équipé d'un détendeur 44. La caméra 9 est alimentée par un circuit électrique 45 passé à travers un passage de paroi étanche 46.

L'enceinte 7 comporte, à sa partie inférieure, des clapets d'échappement d'eau 47 répartis à sa périphérie.

Afin d'assurer la préhension de l'appareil pour notamment permettre d'être manoeuvré par un plongeur, des cercles tubulaires concentriques 48/49 sont fixés à l'enceinte 7 et aux caissons étanches 7a.

Sur la figure 4, les lignes 50 illustrent de façon très schématique la liaison des corps annulaires 31 des ventouses avec l'enceinte 7 et son prolongement étanche 7a.

Tel que cela est illustré à gauche de la figure 3, la partie inférieure des ventouses 18, avant le placage de l'enceinte 7 sur la paroi 15, sont toutes dans un même plan situé au-dessous du joint d'étanchéité 16 et de l'écran 12.

Les équipements 1 et 4 sont amenés sur le site. On procède au raccordement et au bon fonctionnement de ceux-ci : vidéo, air comprimé, vide... On vérifie l'étanchéité de l'appareil 4 et de l'ombilical 5.

Le dispositif détecteur de fuite par infrarouge 4 est immergé et amené sur le cordon de soudure à contrôler par exemple par plongeur (ou au moyen d'un robot.)

On réalise son accrochage sur la paroi 15 par les ventouses 18 en actionnant les vannes 10a/10b/10d/10e, lesquelles ventouses assurent le bon positionnement du joint 16. Au commencement de l'opération, tous les éléments sont au repos. Les joints 20 sont mis en appui sur la paroi 15, les pistons 21 dépassent légèrement sous les cylindres 19 pour réduire le volume d'eau dans les zones délimitées par les joints 20.

L'air comprimé amené aux ventouses par les circuits 39/40/41/42, arrive par les conduits 19c dans la chambre annulaire 19a des cylindres 19. Les pistons 21 sont refoulés vers le haut de la ventouse en comprimant les ressorts 28. Une dépression se crée alors dans les chambres 51, ce qui a pour effet de réaliser l'accrochage des ventouses.

Pendant la montée des pistons 21, les billes 35, qui étaient en appui sur l'épaulement conique 31d sont déplacées latéralement d'abord par l'épaulement conique 21c et ensuite par la partie cylindrique 21d des pistons pour pénétrer partiellement dans les chambres annulaires 31a. Lesdites billes coopérant avec lesdits épaulements 31d, provoquent par réaction la descente du corps annulaire 31 qui vient alors en butée sur le cylindre 19 tout en comprimant les ressorts 34. La force d'appui desdits ressorts est réglée par les bagues 33.

Les pistons 21 sont poussés en butée sur les chambres 19a des cylindres 19 sous l'effet des ressorts 28 qui sont à ce moment comprimés.

On règle la force desdits ressorts 28 en agissant sur les vis 25 dont l'extrémité filetée est vissée dans les rondelles 27.

Le mouvement axial de haut en bas des corps 31 des ventouses qui sont reliés à l'enceinte 7 a pour effet de plaquer le joint 16 sur la paroi 15 et de plaquer également l'écran 12 contre ladite paroi au-dessus du cordon de soudure à contrôler.

On actionne alors la vanne 10c et on chasse l'eau de l'enceinte par le clapet 47 sous l'effet de l'air comprimé.

On met ensuite en dépression l'enceinte 7 en la reliant au circuit de vide 38, ce qui a pour effet de plaquer l'enceinte en réalisant l'étanchéité totale au niveau du joint 16.

On déclenche la caméra infrarouge et on réalise le contrôle du cordon de soudure.

A la fin de cette opération et pour déplacer le dispositif 4, on pressurise l'enceinte 7 en agissant sur la vanne 10c et on annule la pressure dans les chambres 19a des ventouses, ce qui a pour effet de ramener les pistons 21 à leur position initiale de repos, tel qu'illustré à gauche de la figure 4.

Simultanément les billes 35 sont repoussées contre la partie cylindrique 21h des pistons et les corps annulaires 31 reviennent à leur position initiale, ce qui provoque le décollage du joint 16 et corrélativement le décrochage de l'appareil 4.

L'appareil 4 peut être alors déplacé sur le cordon de soudure pour recommencer l'opération de contrôle sur la longueur dudit cordon.

## Revendications

1. Dispositif pour détecter des micro-fuites de gaz par rayonnement infrarouge sur une paroi (15), le dispositif comprenant un enceinte (7) comportant une caméra infrarouge et comportant, en outre, une ouverture équipée de moyens d'étanchéité (16) pour être mis au contact de la paroi (15), des moyens (18), pour plaquer de façon étanche l'enceinte (7) contre ladite paroi (15 et des moyens (38) pour créer une dépression dans l'enceinte (7), caractérisé en ce que ladite caméra infrarouge est disposée dans un caisson étanche (7a) séparé de l'enceinte (7) par une cloison (7b) et dont l'objectif de la caméra est situé devant une lentille (8) perméable aux radiations infrarouges et enchâssée dans ladite cloison de séparation (7b) et en ce que le dispositif comporte en outre un écran isolant (12) placé dans la partie centrale de l'ouverture de l'enceinte (7) et destiné à être appliqué contre ladite paroi (15) pour filtrer les fuites de gaz aspirées sous l'effet de vide afin d'obtenir un gradient thermique détectable par thermovision.

2. Dispositif selon la revendication 1, pour détecter des micro-fuites de gaz par rayonnement infrarouge sur une paroi (15) immergée, caractérisé en ce qu'il comporte des moyens (10c/47) pour chasser l'eau de l'enceinte (7) sous l'effet d'un jet d'air comprimé avant de mettre en oeuvre lesdits moyens (38) de mise en dépression de l'enceinte (7).

3. Dispositif selon la revendication 1, caractérisé en ce que ledit écran (12) est monté dans un cadre (13) d'un contour parallèle à l'ouverture de l'enceinte (7), lequel cadre (13) est soumis à l'action de moyens élastiques (14), reliés à l'enceinte (7) pour maintenir le cadre (13) et l'écran (12) à l'extérieur de ladite ouverture en vue d'obtenir, lors du rapprochement de l'enceinte (7) et de la paroi (15) le placage de l'écran (12) contre ladite paroi.

4. Dispositif selon l'une quelconque des revendications 1 à 3, caractérisé en ce que ledit écran (12) est réalisé à partir d'un matériau isolant de synthèse à cellules ou à porosités ouvertes.

5. Dispositif selon l'une quelconque des revendications 1 à 3, caractérisé en ce que ledit écran (12) est réalisé à partir d'une grille isolante à mailles serrées.

6. Dispositif selon l'une quelconque des revendications 1 à 5, caractérisé en ce que ladite enceinte (7), qui est hémisphérique, et ledit caisson (7a), qui est cylindrique, sont coaxiaux et en ce que l'objectif (9a) de la caméra (9) est disposé de telle sorte que le champ de rayonnement infrarouge intéresse la totalité de la surface de l'écran (12).

7. Dispositif selon la revendicaiton 1, caractérisé en ce que le bord qui entoure l'ouverture de l'enceinte, comporte une gorge (7e) dans laquelle est fixé un joint d'étanchéité (16) comportant un talon (16b) et une lèvre souple (16a) s'étendant sur un des côtés du talon et en ce que la partie inférieure du talon est, avant placage du joint sur la paroi (15), en retrait par rapport à l'extrémité de la lèvre (16a) du joint.

8. Dispositif selon la revendication 7, caractérisé en ce que ladite lèvre (16a) forme avec la partie inférieure du talon (16b) une dépression (16c) en forme de gouttière dont la profondeur maximale "p" est sensiblement égale à la distance "d" qui sépare l'extrémité de la lèvre (16a) et la partie inférieure du talon (16b).

9. Dispositif selon l'une quelconque des revendications 7 et 8, caractérisé en ce que le joint (16) comporte dans le fond de ladite dépression (16c) et accolé au talon (16b) un bourrelet de produit hydrofuge (17).

10. Dispositif selon l'une quelconque des revendications 1 à 9, caractérisé en ce qu'il comporte, en outre, des ventouses (18) réparties à la périphérie de l'enceinte (7) et situées sensiblement dans le plan de l'ouverture de ladite enceinte, lesquelles ventouses (18) ont pour fonction d'assurer l'accrochage du dispositif sur la paroi (15) et le rapprochement de l'enceinte (7) et de ladite paroi en vue de la mise en place correcte du joint à lèvre (16) sur la paroi (15) et son écrasement, avant la mise en dépression de l'enceinte (7), pour réaliser l'opération de détection thermographique des fuites de gaz.

11. Dispositif selon la revendication 10, caractérisé en ce que chacune des ventouses (18) se compose de trois éléments coaxiaux :
   – un cylindre (19) comportant un joint d'étanchéité (20) à sa partie inférieure destiné à venir au contact de la paroi (15) ;
   – un piston (21) monté coulissant dans ledit cylindre (19) et soumis à l'action de moyens élastiques (28) pour repousser le piston (21) du côté de la partie inférieure du cylindre (19) ;
   – un corps annulaire (31) qui entoure le cylindre (19) et qui est relié à l'enceinte (7), lesquel corps (31) est soumis à l'action de moyens élastiques (34) pour le repousser du côté de la partie supérieure du cylindre (19) ;
   – des moyens pour repousser le piston (21) vers le haut et pour créer une dépression dans la chambre (51) ainsi créée à la partie inférieure du cylindre (19) en vue de plaquer la ventouse sur la paroi (15) ;
   – et des moyens (21c/35) pour simultanément abaisser ledit corps annulaire (31) pour plaquer l'enceinte (7) sur ladite paroi (15).

12. Dispositif selon la revendication 11, caractérisé en ce que les moyens pour simultanément déplacer le piston (21) vers le haut de la ventouse et le corps annulaire (31) vers le bas, sont des billes (35), disposées dans des logements (19e) réservés au même niveau dans la paroi dudit cylindre (19) et réparties à sa périphérie, lesquelles billes (35) coopèrent avec des épaulements coniques dont l'un (21c)

est réservé à la périphérie du piston (21) et à ses génératrices qui convergent de bas en haut sur l'axe de symétrie (X X1) de la ventouse (18) et dont l'autres (31d) est réservé à l'intérieur du corps annulaire (31) et à ses génératrices qui convergent de haut en bas sur ledit axe (X X1) de la ventouse, de telle sorte que les billes (35) qui sont poussées par l'épaulement (21c) du piston (21) lors de son mouvement ascendant prennent appui sur l'épaulement (31d) du corps annulaire (31) et au fur et à mesure de la montée du piston (21) sont expulsées par la périphérie du piston (21) dans ledit corps annulaire (31) pour venir en appui sur l'épaulement conique (31d) dudit corps (31) et communiquer à celui-ci un mouvement descendant.

## Ansprüche

1. Vorrichtung zum Ermitteln von Mikrogasaustritten mittels Infrarotstrahlung an einer Wand (15), umfassend einen Behälter (7) mit einer Infrarotkamera und weiters mit einer mit mit der Wand (15) in Kontakt zu gelangenden Dichtigkeitsmitteln (16) versehenen Öffnung, Mittel (18) zum dichten Anlegen des Behälters (7) an die Wand (15) und Mittel (38) zum Erzeugen eines Unterdrucks im Behälter (7), dadurch gekennzeichnet, daß die Infrarotkamera in einem vom Behälter (7) durch eine Trennwand (7b) abgetrennten dichten Kasten (7a) untergebracht ist, wobei sich das Objektiv der Kamera vor einer für Infrarotstrahlen durchlässigen und in der Trennwand (7b) eingelassenen Linse (8) befindet, und daß die Vorrichtung weiters einen im Mittelteil der Öffnung des Behälters (7) angeordneten und zwecks Filterns der unter Vakuumwirkung angesaugten Gasverluste an die Wand (15) anlegbaren Isolierschild (12) umfaßt, um einen durch Thermovision ermittelbaren Wärmegradienten zu erlangen.

2. Vorrichtung nach Anspruch 1 zum Ermitteln von Mikrogasaustritten mittels Infrarotstrahlung an einer eingetauchten Wand (15), dadurch gekennzeichnet, daß sie Mittel (10c/47) zum Austreiben des Wassers aus dem Behälter (7) unter der Wirkung eines Druckluftstrahls vor Inbetriebnahme der Mittel (38) zum Unterunterdrucksetzen des Behälters (7) umfaßt.

3. Vorrichtung nach Anspruch 1, dadurch gekennzeichnet, daß der Schild (12) in einem Rahmen (13) mit einer zur Öffnung des Behälters (7) parallelen Kontur montiert ist, welcher Rahmen (13) der Wirkung von elastischen Mitteln (14) unterworfen ist, welche zum Halten des Rahmens (13) und des Schildes (12) außerhalb der Öffnung zwecks Inanlagebringens des Schildes (12) an die Wand bei Zusammenbringen des Behälters (7) und der Wand (15) mit dem Behälter (7) verbunden sind.

4. Vorrichtung nach einem der Ansprüche 1 bis 3, dadurch gekennzeichnet, daß der Schild (12) aus synthetischem Isoliermaterial mit offenen Zellen oder Porenräumen hergestellt ist.

5. Vorrichtung nach einem der Ansprüche 1 bis 3, dadurch gekennzeichnet, daß der Schild (12) aus einem dichtmaschigen Isoliergitter hergestellt ist.

6. Vorrichtung nach einem der Ansprüche 1 bis 5, dadurch gekennzeichnet, daß der Behälter (7), der halbkugelförmig ist, und der Kasten (7a), der zylindrisch ist, koaxial sind, und daß das Objektiv (9a) der Kamera (9) derart angeordnet ist, daß das Infrarotstrahlenfeld die gesamte Oberfläche des Schildes (12) erfaßt.

7. Vorrichtung nach Anspruch 1, dadurch gekennzeichnet, daß der die Öffnung des Behälters umgebende Rand eine Nut (7e) aufweist, in welcher ein Dichtungsorgan (16) mit einem Ansatz (16b) und einer sich auf einer Seite des Ansatzes erstreckenden nachgiebigen Lippe (16a) befestigt ist, und daß der untere Teil des Ansatzes vor Anlegen der Dichtung an die Wand (15) in bezug auf das Ende der Lippe (16a) der Dichtung zurückversetzt ist.

8. Vorrichtung nach Anspruch 7, dadurch gekennzeichnet, daß die Lippe (16a) mit dem unteren Teil des Ansatzes (16b) eine Vertiefung (16c) in Rinnenform bildet, deren maximale Tiefe "p" im wesentlichen gleich dem Abstand "d" ist, der das Ende der Lippe (16a) und den unteren Teil des Ansatzes (16b) trennt.

9. Vorrichtung nach einem der Ansprüche 7 und 8, dadurch gekennzeichnet, daß die Dichtung (16) im Boden der Vertiefung (16c) und an den Ansatz (16b) angefügt einen Wulst (17) aus wasserabstoßendem Material umfaßt.

10. Vorrichtung nach einem der Ansprüche 1 bis 9, dadurch gekennzeichnet, daß sie weiters am Umfang des Behälters (7) verteilte und im wesentlichen in der Ebene der Öffnung des Behälters liegende Saugnäpfe (18) umfaßt, welche Saugnäpfe (18) die Funktion haben, das Anhaften der Vorrichtung an der Wand (15) und das Zusammenbringen des Behälters (7) und der Wand zwecks korrekter Anordnung der Dichtlippe (16) an der Wand (15) und Zusammendrückens derselben vor Unterunterdruckbringen des Behälters (7) für die Durchführung der thermografischen Ermittlung von Gasverlusten zu gewährleisten.

11. Vorrichtung nach Anspruch 10, dadurch gekennzeichnet, daß sich jeder Saugnapf (18) aus drei koaxialen Elementen zusammensetzt:

– einem Zylinder (19) mit einem mit der Wand (15) in Kontakt zu gelangenden Dichtungsorgan (20) in seinem unteren Teil;

– einem gleitend im Zylinder (19) gelagerten Kolben (21), welcher der Wirkung elastischer Mittel (28) zum Zurückdrängen des Kolbens (21) von der Seite des unteren Teils des Zylinders (19) unterworfen ist;

– einem den Zylinder (19) umgebenden und mit dem Behälter (7) verbundenen Ringkörper (31), welcher der Wirkung elastischer Mittel (34) zum Zurückdrängen desselben von der Seite des oberen Teils des Zylinders (19) unterworfen ist ;
– Mitteln zum Zurückdrängen des Kolbens (21) nach oben und zum Erzeugen eines Unterdrucks in der so im unteren Teil des Zylinders (19) gebildeten Kammer (51) zwecks Anlegens des Saugnapfes an die Wand (15) ;
– und Mittel (21c/35) zum gleichzeitigen Absenken des Ringkörpers (31) zwecks Anlegens des Behälters (7) an die Wand (15).

12. Vorrichtung nach Anspruch 11, dadurch gekennzeichnet, daß die Mittel zum gleichzeitigen Verschieben des Kolbens (21) nach oberhalb des Saugnapfes sowie des Ringkörpers (31) nach unten Kugeln (35) sind, welche in im selben Niveau in der Wand des Zylinders (19) vorgesehenen und an dessen Umfang verteilten Aufnahmen (19e) eingesetzt sind, welche Kugeln (35) mit konischen Schultern zusammenwirken, von denen eine (21c) am Umfang des Kolbens (21) und an dessen von unten nach oben an der Symmetrieachse (X X1) des Saugnapfes (18) zusammenlaufenden Erzeugenden vorgesehen ist und die andere (31d) im Inneren des Ringkörpers (31) und an dessen von oben nach unten an der Achse (X X1) des Saugnapfes zusammenlaufenden Erzeugenden vorgesehen ist, sodaß die Kugeln (35), die bei der Aufwärtsbewegung des Kolbens (21) von der Schulter (21c) desselben gestoßen werden, an der Schulter (31d) des Ringkörpers (31) in Anlage kommen und je nach dem Hub des Kolbens (21) vom Umfang des Kolbens (21) in den Ringkörper (31) hinausgetrieben werden, um auf der konischen Schulter (31d) des Körpers (31) in Anlage zu kommen und diesem eine Abwärtsbewegung aufzuzwingen.

## Claims

1. Device for detecting micro-leaks of gas by infrared radiations on a wall (15), said device comprising an enclosure (7) provided with an infrared camera and further provided with an opening equipped with sealing means (16) designed to be placed in contact with the wall (15), means (18) for sealingly applying said enclosure (7) against said wall (15) and means (38) for creating a depression inside said enclosure (7), characterized in that said infrared camera is placed inside a sealed tank (7a) separated from the enclosure (7) by a partition wall (7b), and has its objective situated in front of a lens (8) permeable to infrared radiations and fixed in said partition wall (7b), and in that the device further comprises an insulating screen (12) placed in the center of the opening of the enclosure (7) and designed to be applied against said wall (15) for filtering the gas leaks drawn by the effect of the vacuum, so as to obtain a thermal gradient detectable by thermovision.

2. Device according to claim 1, for detecting micro-leaks of gas by infrared radiations on an immersed wall (15), characterized in that it comprises means (10c/47) for expelling the water from the enclosure (7) under the effect of a stream of compressed air before using the means (38) for depressurizing the enclosure (7).

3. Device according to claim 1, characterized in that said screen (12) is mounted in a frame (13) of outline parallel to the opening of the enclosure (7), said frame (13) being subjected to the action of elastic means (14) joined to the enclosure (7) in order to keep the frame (13) and the screen (12) outside said opening, such that, when the enclosure (7) and the wall (15) are close together, the screen (12) is applied against said wall.

4. Device according to any one of claims 1 to 3, characterized in that said screen (12) is produced from a synthetic insulating material with open cells or pores.

5. Device according to any one of claims 1 to 3, characterized in that said screen (12) is produced from a fine-meshed insulating grid.

6. Device according to anyone of claims 1 to 5, characterized in that said enclosure (7), which is semi-spherical, and said tank (7a), which is cylindrical, are co-axial, and the objective (9a) of the camera (9) is placed in such a way that the field of infrared radiations covers the whole surface of the screen (12).

7. Device according to claim 1, characterized in that the edge around the opening of the enclosure, comprises a groove (7e) in which is fixed a seal (16) comprising a heel portion (16b) and a supple lip (16a) extending on one of the sides of said heel portion and in that the lower part of the heel portion is, before the seal is applied against the wall (15), offset with respect to the end of the lip (16a) of the seal.

8. Device according to claim 7, characterized in that said lip (16a) forms with the lower part of the heel portion (16b), a trough-shaped depression (16c), of which the maximum depth "p" is substantially equal to the distance "d" between the end of the lip (16a) and the lower part of the heel portion (16b).

9. Device according to any one of claims 7 and 8, characterized in that the seal (16) comprises a roll of hydrophobic product (17), contained at the bottom of the depression (16c) abreast of said heel portion (16b).

10. Device according to any one of claims 7 and 8, characterized in that it further comprises suction cups (18), distributed on the periphery of the enclosure (7) and situated substantially inside the plane of the opening of said enclosure, said suction cups (18) being adapted to secure the device on the wall (15) and to bring the enclosure (7) closer to said wall, so as to accurately position the lip seal (16) on the wall (15) and crush it, before depressurizing the enclosure (7) to carry out the thermographic detection of gas leaks.

11. Device according to claim 10, characterized in that each suction cup (18) is composed of three co-axial elements :

  – a cylinder (19) equipped at its lower part with a seal (20) designed to come into contact with the wall (15) ;

  – a piston (21), mounted for sliding in said cylinder (19) and subjected to the action of elastic means (28) forcing said piston (21) back toward the lower part of the cylinder (19) ;

  – an annular body (31) surrounding the cylinder (19) and which is joined to the enclosure (7), said body (31) being subjected to the action of elastic means (34) forcing it back toward the upper part of the cylinder (19) ;

  – means for forcing the piston (21) upwardly and for creating a depression inside the chamber (51) thus formed at the lower part of the cylinder (19) in order to apply the suction cup against the wall (15) ;

  – and means (21c/35) for simultaneously lowering said annular body (31) in order to apply the enclosure (7) against said wall (15).

12. Device according to claim 11, characterized in that the means provided for simultaneously moving the piston (21) toward the top of the suction cup and the annular body (31) toward the bottom, are balls (35), placed in housings (19e) formed at the same level in the wall of said cylinder (19) and distributed on its periphery, said balls (35) cooperating with conical shoulders of which one (21c) is reserved on the periphery of the piston (21) and on its generatrices converging downwardly on the axis of symmetry (X X1) of the suction cup (18), while the other (31d) is reserved on the inside of the annular body (31) and for its generatrices converging downwardly on said axis (X X1) of the suction cup, in such a way that the balls (35), which are pushed by the shoulder (21c) of the piston (21) during its upward stroke, come to rest on the shoulder (31d) of the annular body (31) and, as the piston (21) progresses upward, are expelled via the periphery of the piston (21) into said annular body (31), coming then to rest on the conical shoulder (31d) of said body (31), and imparting a downward movement thereto.

Fig.1

Fig. 2

Fig. 3

Fig. 4

EP 0 286 557 B1